# DEMANDE DE BREVET EUROPEEN

(11) **EP 1 191 792 A1**
(43) Date de publication de la demande: **27.03.2002**
(21) Numéro de dépôt: 01402419.4
(22) Date de dépôt: 20.09.2001
(51) Int. Cl.: H04N 7/167, H04N 7/16, H04N 5/913

(54) **Décodeur de télévision numérique avec dispositif de réception amovible et optionnel**

(30) Priorité: 20.09.2000 FR 0011955
(71) Demandeur: SAGEM S.A., 75015 Paris (FR)
(72) Inventeur: Venom, Didier M., 95400 Arnouville les Gonesse (FR)
(74) Mandataire: Schmit, Christian Norbert Marie

(57) **Abrégé**

L'invention concerne un décodeur de télévision numérique (100) auquel on peut ajouter un dispositif de réception supplémentaire (2), amovible et optionnel. Un utilisateur peut ainsi extraire d'un ensemble de flux de signaux reçus (S) plusieurs services de télévision n'appartenant pas nécessairement au même flux de signaux. Différents moyens sont mis en oeuvre au sein du décodeur (100) pour gérer la présence et le fonctionnement du dispositif de réception supplémentaire (2).

## Description

La présente invention a pour objet un décodeur de télévision numérique avec un dispositif de réception amovible et optionnel. Plus particulièrement, l'invention concerne un décodeur de télévision numérique qui est susceptible de recevoir et de mettre en service, selon la volonté de l'utilisateur, un dispositif de réception supplémentaire qui, en combinaison avec un dispositif de réception d'origine du décodeur, permet de recevoir simultanément deux services de télévision distincts. Un objectif de l'invention est de permettre aux opérateurs de télévision de ne pas augmenter le coût de fabrication des décodeurs qu'ils louent à des utilisateurs, tout en laissant la possibilité aux utilisateurs de décodeurs d'améliorer facilement les capacités de leur décodeur et d'en étendre les fonctionnalités.

D'une façon générale, le domaine de l'invention est celui de la télévision numérique. Dans le domaine de la télévision numérique, des décodeurs de télévision numérique sont utilisés, notamment afin d'accéder à un ensemble de chaînes de télévision cryptées. Les décodeurs de télévision sont des organes effectuant une interface entre des systèmes de transmission de signaux de télévision, notamment de signaux de télévision numérique au format MPEG et DVB, et des moniteurs de visualisation. Souvent, le moniteur comporte en lui-même des circuits de décodage de ces signaux de télévision mais ce n'est pas une obligation. Les signaux échangés sont le plus souvent des signaux numériques, mais un décodeur peut aussi avoir des facultés de traitement de signaux analogiques. Les moyens de transmission qui transmettent les émissions de télévision à ces décodeurs/récepteurs sont soit des moyens de transmission aériens classiques (dans des bandes de fréquence à l'émission de 17 à 862 MHz), soit des câbles coaxiaux (dans des bandes de fréquence à l'émission de 110 à 862 MHz), voire optiques, soit des satellites de réemission qui desservent une région (dans des bandes de fréquence à l'émission de 10,3 à 12,8 GHz).

Typiquement, le décodeur comporte des moyens de réception pour recevoir les signaux émis et des moyens de formatage pour transformer les signaux reçus en des signaux applicables directement sur les organes de commande du dispositif de visualisation. Pour un tube cathodique, il s'agit par exemple des commandes appliquées sur les organes de balayage et sur les différents canons à électrons produisant des pixels de couleur sur l'écran. Habituellement, les décodeurs de télévision numériques sont mis à disposition des utilisateurs abonnés par des opérateurs de télévision qui diffusent un ensemble de services appelé bouquet numérique. Ces opérateurs louent ainsi un appareil qui permet à chacun de leurs abonnés, d'une part de recevoir et de décrypter un ensemble de signaux télévisuels correspondant aux différents services de télévision qui constituent leur bouquet numérique et, d'autre part, de recevoir un ensemble de signaux de fonctionnement qui permettent au décodeur de réaliser les différentes opérations de décryptage et éventuellement de mettre à jour et/ou de déclencher certaines fonctionnalités du décodeur. Les utilisateurs abonnés à un opérateur étant de plus en plus nombreux, ces opérateurs doivent disposer d'un nombre constamment croissant de décodeurs à louer aux abonnés. Ces opérateurs cherchent donc à limiter le plus possible le coût de fabrication des décodeurs.

Cependant, parallèlement à ce soucis de coût de fabrication, les opérateurs proposent en permanence de plus en plus de nouvelles fonctionnalités qui peuvent être mises en oeuvre au moyen du décodeur pour rendre toujours plus attractif son utilisation. Par exemple, certains opérateurs proposent aujourd'hui une fonctionnalité de vidéo différée, une fonctionnalité de création d'image mosaïque ou encore différentes fonctionnalités d'enregistrement de programmes de télévision au sein même du décodeur de télévision numérique. Ces nouvelles fonctionnalités requièrent en outre la présence d'un ou plusieurs modules de mémoire de grande capacité de type disque dur.

Or la portée de certaines de ces fonctionnalités, et notamment de celles relatives à l'enregistrement d'émissions de télévision, se trouve considérablement limitée du fait de la présence d'un unique dispositif de réception au sein des décodeurs de télévision. En effet, un unique dispositif de réception ne comprend, par définition, qu'un unique tuner dont la fonction est d'extraire de l'ensemble de flux de signaux disponibles un flux de signaux particulier. Ce flux correspond à un transpondeur qui comporte plusieurs services de télévision multiplexés. Le décodeur de télévision ne peut donc sélectionner à un instant donné qu'un unique flux de signaux à partir duquel il peut extraire un service de télévision déterminé. Sur son disque dur, il ne peut donc enregistrer que le service de télévision qu'il visualise sur son écran de télévision. Dans certains décodeurs perfectionnés, il est possible d'enregistrer un premier service de télévision tout en visualisant un autre service, à la condition sine qua none que ces deux services soient transmis dans un même flux de signaux, par un même transpondeur. Ainsi, un utilisateur n'a pas la possibilité de regarder un service particulier tout en enregistrant un autre service qui appartient à un autre flux de signaux.

L'intérêt de la présence des disques durs de grande capacité au sein du décodeur est donc réduit et l'utilisateur ne retrouve pas le confort d'utilisation dont il dispose avec un magnétoscope classique pour enregistrer des émissions de télévision. En effet, le magnétoscope classique comporte un tuner qui permet de sélectionner et d'enregistrer un autre service de télévision que le service sélectionné par le tuner du téléviseur et restitué sur l'écran de télévision.

Une solution envisagée par l'opérateur pourrait être d'équiper systématiquement les décodeurs d'un deuxième dispositif de réception. Cependant, une telle opération alourdirait considérablement le coût de fabrication d'un décodeur pour les opérateurs. Par ailleurs, un deuxième dispositif de réception sera principalement utilisé en combinaison avec un disque dur de grande capacité, notamment à des fins d'enregistrement ; or ces disques durs ne sont pas nécessairement présents au sein de tous les décodeurs, et l'intérêt d'un deuxième dispositif de réception devient nettement moindre pour les décodeurs qui en sont dépourvus.

Le décodeur de télévision numérique selon l'invention permet de pallier l'ensemble des inconvénients qui viennent d'être exposés. En effet, le décodeur de télévision numérique selon l'invention permet d'accéder à des fonctions d'enregistrement de services de télévision, appartenant à un premier flux de signaux, sur un disque dur de grande capacité tout en autorisant la visualisation d'un autre service de télévision, appartenant à un deuxième flux de signaux, sur un téléviseur connecté au décodeur, et tout en assurant un coût de fabrication raisonnable du décodeur loué à l'utilisateur abonné. A cet effet, le décodeur selon l'invention laisse la possibilité à l'utilisateur d'ajouter au sein du décodeur, de façon relativement simple, un deuxième dispositif de réception amovible et optionnel. En conséquence, le coût du deuxième dispositif de réception n'est plus supporté par l'opérateur de télévision, mais par l'utilisateur du décodeur qui souhaite accéder à des fonctionnalités d'enregistrement améliorées sur le disque dur. Dans le décodeur de télévision numérique selon l'invention, un fonctionnement dit de base ou minimal, assurant les principales fonctions de décryptage de services de télévision, entre autre grâce à la présence d'un dispositif de réception initial et inamovible, est assuré à l'aide du décodeur tel que loué par l'opérateur à un utilisateur. Le dispositif de réception supplémentaire est donc dit optionnel dans le sens où sa présence n'est pas indispensable à un fonctionnement minimal du décodeur dans lequel il peut être inséré.

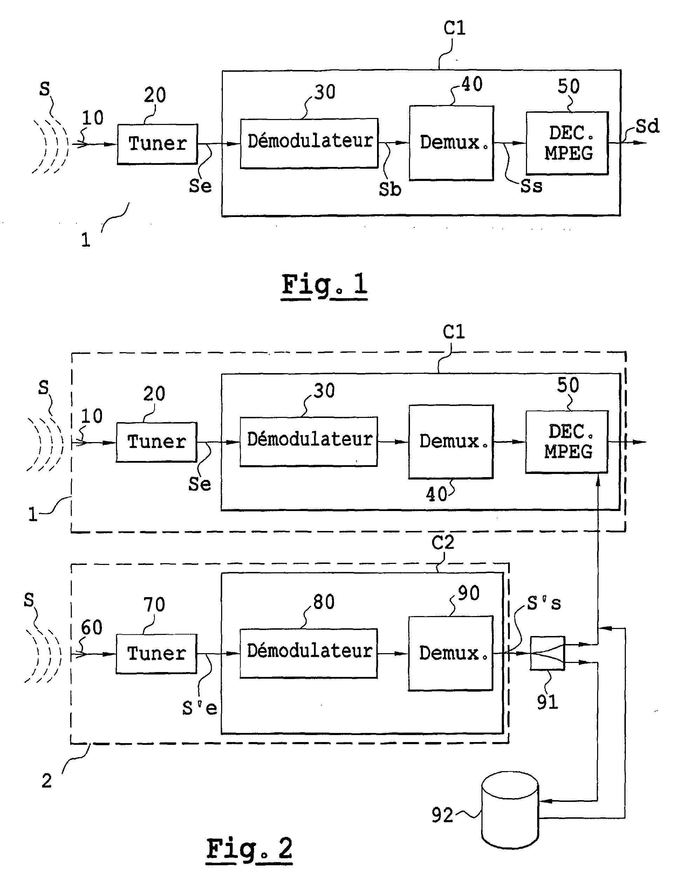

A la figure 1, un dispositif de réception classique 1, tel que l'on peut trouver dans chaque décodeur, est représenté. Il comporte une antenne 10 qui reçoit un ensemble de flux de signaux télévisuels et/ou de signalisation S, connecté à un tuner 20. Dans l'ensemble de la description, le terme antenne est un terme générique désignant un moyen de réception de signaux, qu'il s'agisse de signaux transmis depuis des satellites, de signaux terrestres ou de signaux transmis par cables. Le tuner 20 permet d'extraire de l'ensemble des flux de signaux S reçus par l'antenne 10 un flux de signaux particulier Se en se calant sur une fréquence associée à ce flux particulier. Cette fréquence correspond à la fréquence d'un transpondeur émettant ce flux de signaux qui contient le plus souvent huit services de télévision distincts multiplexés. Le flux de signaux extrait Se par le tuner 20 est ensuite transmis à un démodulateur 30 qui délivre des signaux en bande de base Sb. Un démultiplexeur 40 permet alors d'isoler un service sélectionné Ss par l'utilisateur du décodeur parmi les quelques services présents dans le flux de signaux extrait Se par le tuner 20. Le service sélectionné Ss subit alors une opération de décodage au sein d'un module de décodage 50 qui réalise notamment une opération de décompression de signaux codés selon la norme MPEG, dite décodage MPEG. On obtient en sortie du module de décodage MPEG des signaux analogiques décodés Sd. Les signaux décodés Sd peuvent alors être transmis vers un écran de télévision et/ou vers un magnétoscope analogique. Le plus souvent, le module de démodulation 30, le démultiplexeur 40 et le module de décodage 50 sont contenus dans une carte électronique C1, ou puce électronique, dont le fonctionnement est géré par un microprocesseur. La carte électronique associée au tuner est communément appelée un "Front End".

Le dispositif de réception supplémentaire amovible et optionnel qui peut être connecté au décodeur de télévision numérique selon l'invention comprend lui aussi un tuner, un démodulateur et un démultiplexeur. Il peut avoir une antenne commune avec le premier dispositif de réception, mais ce n'est pas une obligation. Par contre, le dispositif de réception supplémentaire ne comporte pas forcément de module de décodage tel que celui présent au sein du premier dispositif de réception 1. En effet, lorsque le deuxième dispositif de réception est utilisé pour enregistrer un programme de télévision dans un module de mémoire du type disque dur, les signaux sont enregistrés sous forme numérique et ne subissent en conséquence pas l'opération de décodage MPEG qui permet de récupérer un signal analogique prêt à être transmis au téléviseur. Le dispositif de réception supplémentaire est donc essentiellement constitué d'un tuner et d'une carte électronique comportant un démodulateur et un démultiplexeur. Lorsqu'un utilisateur souhaite effectuer une lecture du disque dur et des informations qui on été enregistrées sur celui-ci par l'intermédiaire du dispositif de réception supplémentaire, le module de décodage 50, présent dans le dispositif de réception initial du décodeur de base, pourra être utilisé pour transformer les signaux numériques en signaux analogiques.

Selon l'invention, le fonctionnement du dispositif de réception supplémentaire est géré par le microprocesseur et par la mémoire de programmes du décodeur. A cet effet, différentes applications permettent de détecter la présence d'un deuxième dispositif de réception et d'adapter les applications de la mémoire de programmes à cette éventuelle présence. Des applications spécifiques de gestion du fonctionnement du dispositif de réception supplémentaire peuvent être ajoutées dans la mémoire de programmes ou dans tout autre type de mémoire. Selon l'invention, il est envisagé que le dispositif de réception supplémentaire puisse recevoir des signaux ayant subi une autre modulation que les signaux reçus par l'antenne 10 du dispositif de réception initial.

L'invention concerne donc un décodeur de télévision numérique comportant un premier dispositif de réception, comprenant un premier tuner, d'un ensemble de flux de signaux télévisuels et/ou de signalisation, une mémoire de programmes contenant en outre un premier ensemble d'applications, et un microprocesseur, caractérisé en ce qu'il comporte des moyens de connexion pour recevoir un deuxième dispositif de réception, optionnel et amovible, de l'ensemble de flux de signaux télévisuels et/ou de signalisation, le deuxième dispositif de réception comportant notamment un deuxième tuner.

Le deuxième dispositif de réception est constitué notamment d'une carte électronique comportant notamment un module de démultiplexage et un démodulateur, ainsi qu'éventuellement un module de décodage dans le cas où l'utilisateur souhaite récupérer en sortie du deuxième dispositif de réception un signal analogique par exemple destiné à un magnétoscope. Selon l'invention, différents moyens sont mis en oeuvre pour gérer la mise en service du deuxième dispositif de réception :
- des moyens pour détecter automatiquement la présence du deuxième dispositif de réception ;
- des moyens pour télécharger un deuxième ensemble d'applications lorsque la présence du deuxième dispositif de réception est détectée ;
- un module de mémoire spécifique pour mémoriser le deuxième ensemble d'applications téléchargé, ce module de mémoire pouvant être contenu dans la carte électronique du deuxième dispositif de réception, ou être constitué par un disque dur contenu dans le décodeur ;
- des moyens interrupteurs entre une entrée du premier dispositif de réception et une entrée du deuxième dispositif de réception ;
- des moyens pour recevoir, au niveau du premier dispositif de réception, des signaux modulés selon un premier type de modulation, et des moyens pour recevoir, au niveau du deuxième dispositif de réception, des signaux modulés selon un deuxième type de modulation.

Selon un mode de réalisation perfectionné de l'invention, la carte électronique est une carte de type PCMCIA. Dans certains modes de réalisation, le tuner peut être contenu dans la carte électronique, qu'elle soit de type PCMCIA ou non.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- à la figure 1, déjà décrite, un dispositif de réception classique d'un décodeur de télévision numérique ;
- à la figure 2, un schéma-bloc illustrant la présence, selon l'invention, de deux dispositifs de réception au sein d'un décodeur de télévision numérique ;
- à la figure 3, une représentation schématique des différents éléments intervenant dans le fonctionnement du décodeur selon l'invention.

A la figure 2, on retrouve le premier dispositif de réception 1 décrit à la figure 1 dont les différents éléments comportent les mêmes références. Sur cette figure, un deuxième dispositif de réception 2 a été ajouté ; il est constitué d'une antenne 60 recevant l'ensemble de flux de signaux S, d'un deuxième tuner 70 délivrant en sortie un deuxième flux de signaux S'e, et d'une deuxième carte électronique C2 comportant un deuxième démodulateur 80 et un deuxième module de démultiplexage 90. Des signaux sélectionnés S's issus du deuxième démultiplexeur 90 sont orientés vers un diplexeur 91 qui permet d'orienter ces signaux soit vers le module de décodage 50, soit vers un module de mémoire spécifique 92. Le module de mémoire spécifique 92 est par exemple un disque dur présent au sein du décodeur de télévision numérique. Dans certaines variantes de réalisation du décodeur, il peut être amovible.

Lorsque le contenu de la mémoire 92 est lu, les différentes données contenues dans cette mémoire sont transmis au module de décodage 50. Le système de réception représenté à la figure 2 est un mode de réalisation préféré de l'invention. Cependant, dans une variante de réalisation on peut trouver dans la deuxième carte électronique C2 un deuxième module de décodage qui permet d'obtenir des signaux analogiques qui seront alors orientés vers un appareil de type magnétoscope. Cette variante de réalisation peut être mis en oeuvre par exemple lorsque le décodeur ne possède pas de disque dur pour mémoriser des informations et que l'utilisateur souhaite enregistrer un service de télévision reçu par son décodeur tout en visualisant un autre service de télévision.

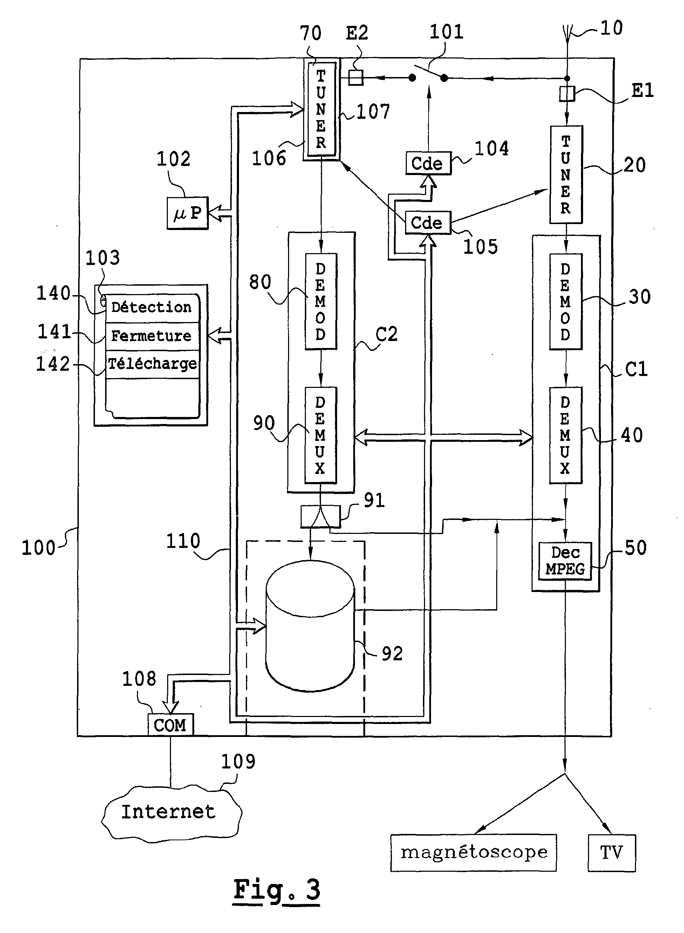

A la figure 3, un exemple de décodeur de télévision numérique 100 selon l'invention est représenté. Sur cette figure, on retrouve de nouveau le premier dispositif de réception 1 et le deuxième dispositif de réception 2 décrits aux figures 1 et 2. Cependant, le deuxième tuner 70 est ici connecté à l'antenne 10 au moyen d'un dispositif interrupteur 101. Les deux dispositifs de réception disposent alors d'une antenne commune. Le dispositif interrupteur est disposé entre une première entrée E1 du premier tuner 20 et une deuxième entrée E2 du deuxième tuner 70. Le deuxième tuner 70 est par ailleurs toujours relié à une deuxième carte électronique C2 comportant les éléments décrits à la figure 2. Les signaux sélectionnés S's issus de la carte électronique C2 sont toujours transmis à un diplexeur qui peut les orienter soit vers le module de décodage 50, soit vers le module de mémoire 92, qui est par exemple un disque dur. Par ailleurs, le décodeur selon l'invention comporte un microprocesseur 102 connecté au moyen d'un bus de communication bidirectionnel 110 à une mémoire de programmes 103, au module de mémoire 92, à un dispositif de commande 104 du dispositif interrupteur 101, à la première carte électronique C1, à la deuxième carte électronique C2, et à un dispositif de commande 105 du premier tuner 20 et du deuxième tuner 70. Le bus de communication véhicule des informations d'adresses, de données ou de commandes entre les différents éléments auxquels il est connecté.

Selon l'invention, un renfoncement 106 est aménagé dans le décodeur de télévision numérique 100 pour recevoir le deuxième tuner 70. Un connecteur 107 spécifique est disposé dans ce renfoncement 106 de telle sorte que le tuner 70 peut venir se brancher sur ce connecteur 107 pour recevoir en entrée les signaux reçus au niveau de l'antenne, et pour fournir en sortie les signaux sélectionnés S's vers la deuxième carte électronique C2. Dans un premier mode de réalisation de l'invention, la carte électronique C2 doit être disposée à l'intérieur du décodeur 100 par une opération nécessitant de démonter le boîtier du décodeur 100. Dans un autre mode de réalisation du décodeur selon l'invention, la carte électronique C2 est réalisée sous la forme d'une carte de type PCMCIA. Cette carte peut être introduite dans une ouverture appropriée, non représentée sur la figure, du décodeur selon l'invention. Un dispositif de connexion adapté disposé dans l'ouverture permet d'intégrer les circuits de la carte électronique C2 contenus dans la carte PCMCIA dans le fonctionnement du décodeur, notamment en assurant une connexion entre le bus de communication 110 et la deuxième carte électronique C2.

Une application 140, dite application de détection d'un deuxième circuit de réception, contenue dans le mémoire de programmes 103 est régulièrement mise en oeuvre, de façon automatique ou non, pour détecter une éventuelle présence d'un deuxième dispositif de réception. Lorsque celle-ci est détectée, une application 141, dite application de fermeture du dispositif interrupteur 101, transmet une instruction de commande au dispositif de commande 104 qui permet de fermer le dispositif interrupteur 101 de façon à ce que le tuner 70 puisse recevoir les signaux reçus au niveau de l'antenne 20. Dans un autre mode de réalisation de l'invention, le tuner 70 est directement relié à une deuxième antenne 60. Dans ce mode de réalisation, le dispositif interrupteur 101 n'est plus nécessaire. Ce mode de réalisation peut être intéressant lorsque les deux dispositifs de réception sont destinés à recevoir des signaux qui ont subi différents types de modulation. Dans cette situation, le premier dispositif de réception 1 peut recevoir des signaux modulés selon une modulation QPSK dans le cas d'une réception par satellite, selon une modulation QAM dans le cas d'une réception par câble, ou selon une modulation COFDM dans le cas d'une réception numérique terrestre, et le deuxième circuit de réception 2 peut recevoir indifféremment un de ces trois types de modulation. La deuxième antenne 60 constitue un moyen pour recevoir des signaux modulés selon un autre type de modulation.

Lorsque la présence d'un deuxième dispositif de réception est détectée, une application 142, dite application de téléchargement, de la mémoire de programmes 103 est mise en oeuvre. Cette application permet au décodeur de télévision numérique de recevoir et de disposer d'un ensemble de nouvelles applications destinées à la gestion du deuxième dispositif de réception. Le téléchargement de nouvelles applications, constituant un deuxième ensemble d'applications, peut se faire soit directement par le flux de signaux arrivant au niveau de l'antenne 10, ou d'une des antennes 10 ou 60, ou encore via une interface de communication 108 reliée d'une part au bus de communication bidirectionnel 110 et d'autre part à un réseau de communication de type réseau Internet 109. Les applications peuvent être téléchargées dans la mémoire de programmes 103. Cependant cette mémoire est le plus souvent constituée de mémoire de type flash EEPROM qui sont, du fait de leur coût, en nombre limité au sein du décodeur initial. Aussi, les applications téléchargées peuvent être mémorisées au sein du module de mémoire 92, ou encore dans une mémoire flash EEPROM supplémentaire ajoutée dans la deuxième carte électronique C2 elle-même du deuxième dispositif de réception 2.

Dans des modes de réalisation différents, le deuxième tuner 70 peut être compris dans la deuxième carte électronique C2. Ceci implique qu'il n'est plus monté en pièce haute, mais qu'il est réalisé sous la forme d'une puce électronique qui peut venir s'insérer dans la carte électronique C2.

Le deuxième dispositif de réception C2 peut être commandé à distance par l'utilisateur, de la même manière, connue, que ce dernier commande le premier dispositif de réception C1. Ainsi, une télécommande peut être utilisée pour émettre des signaux infrarouges reçus par un capteur spécifique qui transmet ces signaux à un dispositif de commande du microprocesseur, ce dernier déclenchant de façon appropriée la mise en oeuvre de différentes applications.

## Revendications

1. Décodeur de télévision numérique (100) comportant un premier dispositif de réception (1), comprenant un premier tuner (20), d'un ensemble de flux de signaux télévisuels et/ou de signalisation (S), une mémoire de programmes (103) contenant en outre un premier ensemble d'applications, et un microprocesseur (102), **caractérisé en ce qu'**il comporte des moyens de connexion (107) pour recevoir un deuxième dispositif de réception (2), optionnel et amovible, de l'ensemble de flux de signaux télévisuels et/ou de signalisation, le deuxième dispositif de réception comportant notamment un deuxième tuner (70).

2. Décodeur de télévision numérique (100) selon la revendication précédente, **caractérisé en ce que** le deuxième dispositif de réception (2) comprend notamment une carte électronique (C2) comportant notamment un démodulateur (80) et un module de démultiplexage (90).

3. Décodeur de télévision numérique (100) selon l'une des revendications précédentes, **caractérisé en ce que** le deuxième dispositif de réception (2) comporte un module de décodage pour récupérer un signal analogique en sortie du deuxième dispositif de réception (2).

4. Décodeur de télévision numérique (100) selon l'une des revendications précédentes, **caractérisé en ce qu'**il comporte des moyens (140) pour détecter automatiquement la présence du deuxième dispositif de réception (2).

5. Décodeur de télévision numérique (100) selon la revendication précédente, **caractérisé en ce qu'**il comporte des moyens (142) pour télécharger un deuxième ensemble d'applications lorsque la présence du deuxième dispositif de réception (2) est détectée.

6. Décodeur de télévision numérique (100) selon la revendication précédente, **caractérisé en ce qu'**il comporte un module de mémoire spécifique (92) pour mémoriser le deuxième ensemble d'applications téléchargé.

7. Décodeur de télévision numérique (100) selon la revendication précédente, **caractérisé en ce que** le module de mémoire spécifique (92) est contenu dans la carte électronique (C2) du deuxième dispositif de réception (2).

8. Décodeur de télévision numérique selon la revendication 6, **caractérisé en ce que** le module de mémoire spécifique (92) est un disque dur contenu dans le décodeur (100).

9. Décodeur de télévision numérique (100) selon l'une des revendications précédentes, **caractérisé en ce qu'**il comporte des moyens interrupteurs (101) entre une entrée (E1) du premier dispositif de réception (1) et une entrée (E2) du deuxième dispositif de réception (2).

10. Décodeur de télévision numérique (100) selon l'une des revendications 2 à 9, **caractérisé en ce que** la carte électronique (C2) est une carte de type PCMCIA.

11. Décodeur de télévision numérique (100) selon l'une des revendications 2 à 10, **caractérisé en ce que** le deuxième tuner (70) est contenu dans la carte électronique (C2).

12. Décodeur de télévision numérique (100) selon l'une des revendications précédentes, **caractérisé en ce qu'**il comporte des moyens (60) pour recevoir, au niveau du premier dispositif de réception (1), des signaux modulés selon un premier type de modulation et des moyens pour recevoir, au niveau du deuxième dispositif de réception (2), des signaux modulés selon un deuxième type de modulation.
